(19) Europäisches Patentamt
European Patent Office
Office européen des brevets

(11) **EP 1 634 855 B1**

(12) **EUROPÄISCHE PATENTSCHRIFT**

(45) Veröffentlichungstag und Bekanntmachung des Hinweises auf die Patenterteilung:
**07.05.2008 Patentblatt 2008/19**

(51) Int Cl.:
*C02F 3/12* (2006.01)     *C02F 3/00* (2006.01)

(21) Anmeldenummer: 05017462.2

(22) Anmeldetag: **16.08.2005**

(54) **Verfahren zur direkten, selektiven Wahl eines gewünschten, niedrigen Schlammindex beim kontinuierlichen Belebtschlammverfahren**

Method for direct selection of a predetermined low sludge index within an activated sludge method

Méthode de sélection directe d'un indice de boue souhaitée dans une méthode de boues activées

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **08.09.2004 DE 102004043815**

(43) Veröffentlichungstag der Anmeldung:
**15.03.2006 Patentblatt 2006/11**

(73) Patentinhaber: **Holm, Niels Christian
32425 Minden (DE)**

(72) Erfinder: **Holm, Niels Christian
32425 Minden (DE)**

(74) Vertreter: **Tönnies, Jan G. et al
Boehmert & Boehmert
Anwaltssozietät
Niemannsweg 133
24105 Kiel (DE)**

(56) Entgegenhaltungen:
**US-A- 4 452 699         US-A1- 2004 016 698**

**Beschreibung**

Die Erfindung betrifft ein Verfahren zur Abwasserbehandlung in kontinuierlichen Belebtschlammkläranlagen mit einem Nachklärbecken mit einem Zulauf. Insbesondere betrifft die Erfindung ein Verfahren zur direkten Belebtschlammselektion im Rahmen von kontinuierlichen Belebtschlammanlagen, bei denen hinsichtlich ihres Schlammindexes (ISV: Maß für die Absetzgeschwindigkeit des Belebtschlammes in einem Belebungsbecken oder SB Reaktor) unterschiedliche Belebtschlamm-Teilströme aus den Nachklärbecken zwecks Einstellung eines gewünschten Schlammindexes entnommen werden können.

Bei sehr vielen kommunalen, industriellen und gewerblichen Abwasserreinigungsanlagen sind in den letzten Jahrzehnten eine Vielzahl von speziellen Verfahrensschritten entwickelt und realisiert worden, um die Auswirkungen auf den Schlammindex gezielt untersuchen zu können, siehe z.B. [1]. In allen diesen Fällen ist es dabei das vorrangige Ziel gewesen, Prozessbedingungen zu "finden", die zu einem stabil niedrigen Schlammindex führen.

Dieses ist ökonomisch sehr vorteilhaft, da die Höhe des Schlammindexes über die Höhe der betreibbaren Belebtschlammkonzentration und/oder der hydraulischen Durchsatzkapazität entscheidet und somit der entscheidende Parameter für die Anlagengröße der Belebungs- und Nachklärbecken ist. Außerdem ist ein stabil niedriger Schlammindex ökologisch sehr vorteilhaft, da überwiegend nur mit hohen Schlammindizes große Probleme wie Schwimm- und Blähschlammbildung verknüpft sind. Diese Schlammfraktionen mit vergleichsweise hohem Schlammindex treiben oft über die Nachklärung unkontrolliert ab in die Vorfluter und verursachen dort erhebliche Gewässerverunreinigungen inklusive Fischsterben.

Zudem führen erhöhte Schlammabtriebe zu entsprechend erhöhten Ablaufkonzentrationen, insbesondere des abwasserabgabepflichtigen Parameters CSB (chemischer Sauerstoff Bedarf). Daraus resultieren dann höhere Abwasserabgabekosten und ggfl. auch Bußgelder.

Der heutige Kenntnisstand hinsichtlich der den Schlammindex beeinflussenden allgemeinen Faktoren nach dem ATV Arbeitsblatt A 131 [2] und dem Merkblatt M 210 [3] lässt sich wie folgt zusammenfassen: Je nach Art der gewerblichen Einflüsse können günstige oder ungünstige Auswirkungen auf den Schlammindex auftreten. Beispielsweise wirken sich Weinbauabwässer oft ungünstig aus. Auch niedrigere Schlammalter wirken sich oft ungünstig auf den Schlammindex aus. Betriebsweisen mit stoßweiser Beschickung nach dem "plug flow" bzw. "feast/famine" Prinzip, beispielsweise mittels mehrerer hintereinander geschalteter Belebungskaskaden wirken sich dagegen überwiegend positiv auf den Schlammindex aus. Grundsätzlich gilt aber, dass selbst bei Realisierung vieler oder aller positiven Faktoren auch hohe Schlammindizes resultieren können und manchmal auch niedrige Schlammindizes unter ungünstigen Bedingungen auftreten.

Auch eine Reihe von speziellen Faktoren, wie anaerobe, anoxische und aerobe Selektoren und Zugabe unterschiedlicher Fäll- und Flockungsmittel sind in ihren Auswirkungen auf den Schlammindex untersucht worden. Manchmal wurden positive und manchmal negative Auswirkungen festgestellt. Wiederum konnte in keinem Fall generell positive Auswirkungen festgestellt werden: Was bei vielen Anlagen zu einer Verringerung des Schlammindexes führte, bewirkte bei anderen Anlagen nahezu nichts und wirkte sich bei einigen sogar negativ aus.

Alle obigen Verfahren zielen darauf ab, Prozessbedingungen zu realisieren, die mehr oder weniger indirekt einen positiven Selektionsdruck auf schnell absetzbare Flocken ausüben. Dies gelingt deshalb oft (aber nicht immer), weil der Belebtschlamm aller Anlagen aus einem Gemisch unterschiedlich schnell absetzbarer Flocken besteht. Der gemessene Schlammindex ist daher eine Art Mittelwert über die Flockenstruktur aller Flocken eines Beckens.

Diese Rahmenbedingungen sind insofern indirekt, als dass bei allen bisher realisierten Formen der Überschussschlammentnahmen aus kontinuierlichen Belebungsanlagen aus den Absetzbereichen der Nachklärbecken erfolgt, die zur besseren Veranschaulichung in drei Typen unterteilt sind:

Bei Typ 1 Anlagen erfolgt die Überschussschlammentnahme entweder aus den zentralen Trichterspitzen runder Nachklärbecken, in die der Belebtschlamm nach bzw. parallel zur Sedimentation hineingeräumt wurde (in horizontalen Nachklärbecken mit Räumschilden) oder direkt hineinsedimentierte (in vertikalen Nachklärbecken).

Bei Typ 2 Anlagen wird Überschussschlamm aus peripheren Trichterbereichen längsdurchströmter rechteckiger Nachklärbecken, in denen der Belebtschlamm nach Sedimentation bzw. parallel zu dieser mittels Bandräumern hineingeräumt wurde, entnommen.

Bei Typ 3 Anlagen wird Überschussschlamm mittels der so genannten Saugräumung mehr oder weniger über die gesamte Sohle runder Nachklärbecken entnommen: An der drehenden Räumbrücke sind vom Zentrum bis zur Peripherie mehrere Saugrohre bis kurz über der Sohle montiert. Über diese Saugrohre wird der Belebtschlamm nach oben gefördert und gesammelt dem Becken entnommen.

Bei dem entnommenen Belebtschlamm handelt es sich in allen Fällen um den so genannten Rücklaufschlamm, der in den Zulauf zu den Belebungsbecken zurückgefördert wird. Aus diesem Rücklaufschlammstrom wird dann bedarfsgerecht der Überschussschlamm entnommen. Aus allen oben aufgeführten Entnahmearten folgt unmittelbar, dass es sich beim Rücklaufschlamm und somit auch beim Überschussschlamm um einen Belebtschlamm handelt, der exakt die gleichen Eigenschaften hat wie der Belebtschlamm im Belebungsbecken, d.h. insbesondere den gleichen Schlammindex.

Ein Verfahren aus dem Stand der Technik ist zum Beispiel US 4 452 699.

Aufgabe dieser Erfindung ist es deshalb, ein Verfahren bereit zu stellen, bei dem die im Belebtschlamm befindlichen Flocken mit guten Absetzeigenschaften direkt positiv selektioniert werden, gegebenenfalls auch ohne dass gute indirekte Rahmenbedingungen vorhanden sind.

Die Erfindung wird gelöst durch ein Verfahren zur Abwasserbehandlung in kontinuierlichen Belebtschlammkläranlagen mit wenigstens einem Becken einer biologischen Klärstufe und einem Nachklärbecken mit einem Zulauf, mit den Schritten a) Entnehmen der sich absetzenden und/oder abgesetzten Schlammfraktion mit hohem Schlammindex als Überschussschlamm, aus wenigstens einem Randbereich des Nachklärbeckens, der dem Zulauf des Nachklärbeckens gegenüberliegend angeordnet ist, b) Einleiten der verbleibenden, sich im Bereich des Zulaufs absetzenden und/oder abgesetzten Schlammfraktion mit niedrigem Schlammindex in wenigstens ein Becken einer dem Nachklärbecken vorgeschalteten Klärstufe, c) Bestimmen des Schlammindex in dem wenigstens einen Becken der biologischen Klärstufe, d) Wiederholen der Schritte a) bis c) bis ein vorbestimmter niedriger Schlammindex in dem wenigstens einen Becken der biologischen Klärstufe erreicht ist.

Das Verfahren zeichnet sich durch eine direkte selektive Überschussschlammentnahme einer Belebtschlammfraktion mit einer höheren Konzentration an schlechter absetzbaren Flocken aus. Anders ausgedrückt: Der zu entnehmende Überschussschlamm besitzt eine höhere Konzentration an Belebtschlammflocken mit im Mittel schlechteren Absetzeigenschaften als die mittlere Absetzeigenschaft des Gesamtbelebtschlammes. Dadurch wird die Konzentration an Flocken mit guten bzw. besseren Absetzeigenschaften im verbleibenden Gesamtschlamm erhöht und damit der Schlammindex des Gesamtschlammes insgesamt erniedrigt. Dieser Schlamm wird bevorzugt in die Belebungsstufe zurückgeführt, wobei dort auch kontinuierlich oder in Abständen der Schlammindex überwacht wird.

Die erfindungsgemäße Lösung wird bei kontinuierlichen Verfahren wie folgt realisiert:

Bei Typ 1 Anlagen, bei denen das Schlamm-Wasser-Gemisch aus einem oder mehreren Belebungsbecken in das Zentrum in mittlerer Wasserspiegelhöhe eines Nachklärbeckens fließt, findet über den Radius dieses Beckens eine quasi Selektion der Flok-

kenstruktur statt: In Nähe des Einfließbereiches im Zentrum setzen sich die kompaktesten, am schnellsten sedimentierbaren Flocken ab (d.h. die mit dem niedrigsten Schlammindex). In Richtung Peripherie mit zunehmendem Schlammindex die übrigen Flocken, d.h. direkt an der Peripherie die Flocken mit den schlechtesten Absetzeigenschaften. Genau diese werden an der Beckenperipherie selektiv entnommen und in die Überschussschlammverarbeitung gegeben: Mit dem Ergebnis, dass der Rücklaufschlamm im Mittel einen Schlammindex auweist, der etwas unter dem Schlammindex in der Belebung liegt.

Bei Typ 2 Anlagen, bei denen das Schlamm-Wasser-Gemisch aus einem oder mehreren Belebungsbecken in ein rechteckiges Nachklärbeckens fließt, findet über die Länge dieses Beckens bis zum gegenüber dem Zulaufbereich befindlichem Ablaufbereich eine quasi Selektion der Flockenstruktur statt: In Nähe des Einfließbereiches setzen sich die kompaktesten am schnellsten sedimentierbaren Flocken (d.h. die mit dem niedrigsten Schlammindex) ab. Am gegenüberliegenden Ende in Richtung des Ablaufbereiches mit zunehmenden Schlammindex die übrigen Flocken, d.h. direkt unter dem Ablaufbereich die Flocken mit den schlechtesten Absetzeigenschaften. Genau diese werden dort selektiv entnommen und in die Überschussschlammverarbeitung gegeben: Mit dem Ergebnis, dass der Rücklaufschlamm im Mittel einen Schlammindex auweist, der etwas unter dem Schlammindex in der Belebung liegt.

Bei Typ 3 Anlagen, bei denen das Schlamm-Wasser-Gemisch aus einem oder mehreren Belebungsbecken in das Zentrum in mittlerer Wasserspiegelhöhe eines Nachklärbeckens fließt, findet über den Radius dieses Beckens eine quasi Selektion der Flockenstruktur statt: In der Nähe des Einfließbereiches im Zentrum setzen sich die kompaktesten am schnellsten sedimentierbaren Flocken, d.h. die mit dem niedrigsten Schlammindex, ab. In Richtung Peripherie setzen sich die übrigen Flocken mit zunehmendem Schlammindex ab, d.h. direkt an der Peripherie befinden sich die Flocken mit den schlechtesten Absetzeigenschaften.

Bei Typ 3 Anlagen werden genau diese bevorzugt an der Beckenperipherie über das dort befindliche Saugrohr selektiv entnommen und nicht mit den über die anderen Saugrohre nach oben geförderten Schlämme vermischt und in einen gemeinsamen Rücklaufschlammstrom gegeben sondern separat entnommen und in die Überschussschlammverarbeitung gegeben: Mit dem Ergebnis, dass der Rücklaufschlamm im Mittel einen Schlammindex aufweist, der etwas unter dem Schlammindex in der Belebung liegt.

Prinzipiell kann die Entnahme des Überschussschlamms und des Rücklaufschlamms bei den beispielhaft vorgestellten Typen von Nachklärbecken mit allen zur Verfügung stehenden Mitteln zur Entnahme einzelner Schlammfraktionen erfolgen. Diese können unter anderem E-Schieber geregelte Abgänge oder Tauchpumpen bzw. trocken aufgestellte Pumpen sein, die die Schlammfraktion über Saugrohre aus dem Nachklärbecken entfernen. Dabei ist die Höhe auf der der Schlamm entnommen wird nicht entscheidend, solange der Überschussschlamm in einem dem Zulauf gegenüberliegenden Bereich des Nachklärbeckens entnommen wird.

Alle oben aufgeführten Selektionsstrategien werden den Schlammindex mehr oder weniger stark reduzieren. Eine Reduktion unterhalb von ca. ISV = 50 ml/g kann jedoch kontraproduktiv sein, da dann unter Umständen die CSB Konzentration im Ablauf ansteigt.

Um diese Entwicklung nach Erreichen des gewünschten Schlammindexes zu beenden, muss gewährleistet sein, dass keine weitere Selektion in Richtung eines noch niedrigeren Schlammindexes erfolgt.

Daher sind die oben aufgeführten Selektionsstrategien so auszuführen, dass auch bei Bedarf der mittlere Schlammindex entnommen werden kann oder sogar die Belebtschlammfraktion mit dem geringen Schlammindex. Genau dies erfolgt wenn über den unter allen Umständen beizubehaltende Rücklaufschlammstrom ein Teilstrom Überschussschlamm auch entnommen wird.

Mit den oben aufgeführten Selektionsstrategien inklusive der Möglichkeit auch gegenzusteuern über den "normalen" Rücklaufschlammstrom kann jede kontinuierliche Anlage sehr weitgehend genau auf jeden beliebig gewünschten Schlammindex eingestellt werden. Selbstverständlich wird diese Einstellung schneller erfolgen, wenn die positiven indirekten Rahmenbedingungen auch vorliegen, aber ihre Bedeutung ist wesentlich geringer als bei Anlagen ohne direkter Selektion von Schlammflocken mit im Mittel höherer Absetzgeschwindigkeit.

Die Folgen für die Planung neuer Anlagen sind eindeutig: Der Schlammindex muss nicht mehr anhand von sehr groben statistischen Erfahrungswerten "bemessen", d.h. abgeschätzt werden, mit den großen Sicherheitszuschlägen, die dann erforderlich sind. Bei Implementierung dieser Erfindung kann der Schlammindex mit großen Sicherheiten nahezu frei "gewählt" werden, d.h. es wird dann ein relativ geringer Schlammindex gewählt mit der Folge von enormen Volumen- und somit Kosteneinsparungen.

Auf vorhandenen Anlagen kann die Erfindung sehr einfach und kostengünstig nachgerüstet werden. Sehr viele ansonsten erforderliche Nachrüstungsmaßnahmen, insbesondere Volumenerweiterungen, werden dann nicht mehr realisiert werden müssen.

Auch die Auswirkungen auf die Schlammbehandlung sind enorm. Mit einem Schlammindex von ca. 45 ml/g ist nach vergleichsweise kurzer statischer Eindickung ein End-TS-Gehalt von 5 - 6 % erreichbar. Damit entfällt die Erfordernis einer maschinellen Eindickung auf diesen TS-Gehalt.

Mit einem ISV = 50 ml/g können nahezu alle vorhanden kontinuierlichen Belebungsanlagen mit viel höheren Belebtschlammkonzentrationen $TS_{BB}$ betrieben werden als die bisher üblichen 2,5 bis 4,5 g/l.

Beispiel auf Basis einer Bemessung nach A 131:

Nachklärbecken horizontal durchströmt mit Saugräumer, d.h. das Rücklaufverhältnis RV = 0,75.
Eindickzeit $t_E$ = 2,0 h
Schlammindex ISV = 50 ml/g

Damit ergibt sich nach A 131:

$$TS_{BS} = 1000/ISV \times t_E^{1/3} = 25{,}2 \text{ g/l}$$

$$TS_{RS} = 0{,}7 \times TS_{BS} = 17{,}64 \text{ g/l}$$

$$TS_{BB} = (RV \times TS_{RS})/(1 + RV) = 7{,}56 \text{ g/l}$$

Nach diesem Beispiel kann die kontinuierliche Belebungsanlage somit mit einer Belebtschlammkonzentration von bis zu 7,56 g/l betrieben werden. Bei Wahl von geringeren Belebtschlammkonzentrationen reduziert sich das erforderliche Volumen der Nachklärung

Literatur

[1] Irvine, R.L., Ketchum Jr., L.H.: Sequencing Batch Reactor for Biological Wastewater Treatment. CRC Crit. Rev. Environ. Control, 1988, 18, 255.

[2] ATV - A 131: Bemessung von einstufigen Belebungsanlagen ab 5.000 Einwohnerwerten. GFA, St.Augustin, Mai 2000.

[3] ATV - M 210: Belebungsanlagen mit Aufstaubetrieb. Gesellschaft zur Förderung der Abwassertechnik e.V. (GFA), Hennef, 1997.

**Patentansprüche**

1. Verfahren zur Abwasserbehandlung in kontinuierlichen Belebtschlammkläranlagen mit wenigstens einem Becken einer biologischen Klärstufe und einem Nachklärbecken mit einem Zulauf, **gekennzeichnet durch**

a) Entnehmen der sich absetzenden und/oder abgesetzten Schlammfraktion mit hohem Schlammindex als Überschussschlamm, aus wenigstens einem Randbereich des Nachklärbeckens, der dem Zulauf des Nachklärbeckens gegenüberliegend angeordnet ist,

b) Einleiten der verbleibenden, sich im Bereich des Zulaufs absetzenden und/oder abgesetzten Schlammfraktion mit niedrigem Schlammindex in wenigstens ein Becken einer dem Nachklärbecken vorgeschalteten Klärstufe,

c) Bestimmen des Schlammindex in dem wenigstens einen Becken der biologischen Klärstufe,

d) Wiederholen der Schritte a) bis c) bis ein vorbestimmter niedriger Schlammindex in dem wenigstens einen Becken der biologischen Klärstufe erreicht ist.

**2.** Verfahren nach Anspruch 1, **dadurch gekennzeichnet, dass** die sich absetzende und/oder abgesetzte Schlammfraktion mit hohem Schlammindex als Überschussschlamm aus einem Typ 1 oder Typ 3 Nachklärbecken an der Peripherie des Beckens entnommen wird.

**3.** Verfahren nach einem der vorhergehenden Ansprüche, **dadurch gekennzeichnet, dass** die sich absetzende oder abgesetzte Schlammfraktion mit hohem Schlammindex als Überschussschlamm bei einem Typ 3 Nachklärbecken am Beckenrand mit einem an der Peripherie des Nachklärbeckens angeordneten Saugrohr entnommen wird.

**4.** Verfahren nach Anspruch 1, **dadurch gekennzeichnet, dass** die sich absetzende oder abgesetzte Schlammfraktion mit hohem Schlammindex als Überschussschlamm bei einem Typ 2 Nachklärbecken an einem dem Zulaufbereich gegenüberliegend angeordneten Beckenende entnommen wird.

**Claims**

**1.** Wastewater treatment process in a continuous activated sludge treatment plant with a minimum of one tank for a biological settling stage and a secondary settling tank with an inlet, **characterised in that**

a) the settling and/or settled upper fraction of the sludge with a high sludge index is removed as surplus sludge from a minimum of one secondary settling tank edge zone lying opposite the inlet to the secondary settling tank,

b) a minimum of one tank of a settling stage connected upstream of the secondary settling tank is filled with the remaining sludge fraction with a low sludge index that is settling and/or has settled in the inlet zone,

c) the sludge index is determined in the minimum of one tank of the biological settling stage,

d) operations a) to c) are repeated until a specified low sludge index is achieved in the minimum of one tank of the biological settling stage.

**2.** Process according to Claim 1, **characterised in that** the settling and/or settled sludge fraction with a high sludge index is removed as surplus sludge from the periphery of a Type 1 or Type 3 secondary settling tank.

**3.** Process according to one of the above Claims, **characterised in that** the settling or settled sludge fraction with a high sludge index is removed as surplus sludge from the edge of a Type 3 secondary settling tank using a suction pipe installed at the periphery of the secondary settling tank.

**4.** Process according to Claim 1, **characterised in that** the settling or settled sludge fraction with a high sludge index is removed as surplus sludge from an end of a Type 2 secondary settling tank lying opposite the inlet area.

**Revendications**

**1.** Procédé de traitement des eaux usées dans des stations d'épuration en continu à boue activée avec au moins un bassin d'épuration biologique et un bassin de décantation secondaire avec une admission, **caractérisé par**

a) prélèvement en tant que boue excédentaire, dans au moins une région de bord du bassin de décantation secondaire qui est disposée à l'opposé de l'admission du bassin de décantation secondaire, de la fraction de boue ayant un indice de boue élevé qui se dépose et/ou qui s'est déposée,

b) introduction de la fraction de boue restante ayant un bas indice de boue, qui se dépose ou s'est déposée dans la région de l'admission, dans au moins un bassin d'épuration placé en amont du bassin de décantation secondaire,

c) détermination de l'indice de boue dans le bassin au moins unique d'épuration biologique,

d) répétition des étapes a) à c) jusqu'à ce qu'un bas indice de boue prédéfini soit atteint dans le bassin au moins unique d'épuration biologique.

**2.** Procédé selon la revendication 1, **caractérisé en ce que** la fraction de boue ayant un indice de boue élevé qui se dépose ou s'est déposée est prélevée en tant que boue excédentaire d'un bassin de décantation secondaire de type 1 ou de type 3, sur la périphérie du bassin.

3. Procédé selon l'une des revendications précédentes, **caractérisé en ce que** la fraction de boue ayant un indice de boue élevé qui se dépose ou s'est déposée est prélevée en tant que boue excédentaire, pour un bassin de décantation secondaire de type 3, sur le bord du bassin avec un tuyau d'aspiration disposé sur la périphérie du bassin de décantation secondaire.

4. Procédé selon la revendication 1, **caractérisé en ce que** la fraction de boue ayant un indice de boue élevé qui se dépose ou s'est déposée est prélevée en tant que boue excédentaire, pour un bassin de décantation secondaire de type 2, à une extrémité du bassin disposée à l'opposé de la région d'alimentation.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4452699 A

**In der Beschreibung aufgeführte Nicht-Patentliteratur**

- **IRVINE, R.L. ; KETCHUM JR., L.H.** Sequencing Batch Reactor for Biological Wastewater Treatment. *CRC Crit. Rev. Environ. Control,* 1988, vol. 18, 255